# EUROPEAN PATENT APPLICATION

(11) **EP 2 136 527 A1**
(43) Date of publication of application: **23.12.2009**
(21) Application number: 08305278.7
(22) Date of filing: 18.06.2008
(51) Int. Cl.: H04L 29/06, H04M 3/42

(54) **A method and a server for enabling a multimode communication unit to benefit from the services of a local area network when said unit is roaming in a wide area network**

(71) Applicant: Alcatel Lucent, 75008 Paris (FR)
(72) Inventor: Gass, Raymond, 67150 Bolsenheim (FR)
(74) Representative: Sciaux, Edmond

(57) **Abstract**

For enabling a multimode communication unit (MCU2) to benefit from the services of a local area network (EN) when said unit is roaming in a wide area network (PLMN), this local area network comprising a communication server (CS) for setting up calls and providing services, the proposed method comprises the steps of:
- establishing a bidirectional voice channel between the multimode communication unit (MCU2) and a mobility server (MS) in the local area network (EN), via said wide area network (PLMN),
- requesting the mobility server (MS) to authenticate the multimode communication unit (MCU2), and then to register it in said communication server (CS),
- and activating a virtual phone in said mobility server (MS), said virtual phone having an extension number proper to the multimode communication unit (MCU2), and behaving as a wired phone of the local area network (EN), for requesting a call setup to another terminal, and for accepting a call setup requested by another terminal.

## Description

### FIELD OF THE INVENTION

The present invention relates to the telecommunication in enterprises, and more peculiarly to a method and a server for enabling a multi-mode wireless communication unit to use telephony services provided by a communication server of an enterprise, even when this unit is outside the premises of this enterprise. A multi-mode wireless communication unit can be alternately connected to at least two kinds of telecommunication networks. Typically it is a mobile phone handset that can be alternately used in a wireless wide area network (a public GSM network for instance) and in a wireless local area network (Wifi for instance). A laptop computer equipped with a GSM adaptor, a Wifi adapter, and running some telephony software can constitute a multimode communication unit has well. Of course, a multimode communication unit can communicate with any other kind of phone terminal.

### BACKGROUND OF THE INVENTION

In the premises of some enterprises, a wired local area network can provide fixed users with high-speed Internet access and telephony services, whereas a Wireless Local Area Network (WLAN) can provide mobile users with high-speed wireless Internet access and telephony services. Employees who need to frequently travel outside the enterprise are provided with multi-mode communication units. A multi-mode communication unit is used for voice communication over the enterprise WLAN when the employee is in the range of the WLAN, and over a wireless public wide area network (WAN) such as a GSM or 3G cellular network, when the employee is not in the range of the WLAN.

Using a multi-mode communication unit over the WLAN while an employee is inside the enterprise gives significant cost savings for the enterprise. In addition, an enterprise communication server provides sophisticated telephony services such as a directory listing all the employees, for instance. So it is desirable that the employees continue to benefit from the same telephony services even when they are outside the enterprise premises.

Therefore, what is needed is a method and a server enabling a multi-mode communication unit to benefit from the services provided by a LAN, when this unit is not connected to this LAN but is connected to a WAN. In addition, the method should not imply modifying the communication server.

### SUMMARY OF THE INVENTION

A first object of the invention is a method for enabling a multimode communication unit to benefit from the services of a local area network when said unit is roaming in a wide area network, this local area network comprising a communication server for setting up calls and providing services, **characterized in that** it comprises the steps of:
- establishing a bidirectional voice channel between the multimode communication unit and a mobility server in the local area network, via said wide area network,
- requesting the mobility server to authenticate the multimode communication unit, and then to register it in said communication server,
- and then activating a virtual phone in said mobility server, said virtual phone having an extension number proper to the multimode communication unit, and behaving as a wired phone of the local area network, for requesting a call setup to another terminal, and for accepting a call setup requested by another terminal.
   Thanks to a virtual phone a behaving as a wired phone of the local area network, a multi-mode wireless communication unit can use telephony services provided by a communication server of an enterprise, even when this unit is outside the premises of this enterprise.
   A remarkable advantage of this method is that it does impose to modify the communication server, since it deals with the virtual phone as with any other phone of the private network.
   A second object of the invention is a server **characterized in that** it comprises means for executing the steps according to the claimed method.
   Other features and advantages of the present invention will become more apparent from the following detailed description of embodiments of the present invention, when taken in conjunction with the accompanying drawings.

### BRIEF DESCRIPTION OF THE DRAWINGS

The accompanying figures, where like reference numerals refer to identical or functionally similar elements and which together with the detailed description below are incorporated in and form part of the specification, serve to further illustrate a preferred embodiment and to explain various principles and advantages in accordance with the present invention.
- FIG. 1 is a diagram illustrating exemplary wireless networks where multi-mode communication units can be used in cooperation with a mobility server according to the invention.
- FIG. 2 is a signalling flow chart illustrating exemplary processes of the method in accordance with the invention, for an outgoing call setup when a multimode communication unit is roaming in a public land mobile network.
- FIG. 3 is a signalling flow chart illustrating exemplary processes of the method in accordance with the invention, for an incoming call setup when a multimode communication unit is roaming in a public land mobile network, and is ready to answer.
- FIG. 4 is a signalling flow chart illustrating exemplary processes of the method in accordance with the invention, for an incoming call setup when a multimode communication unit is roaming in a public land mobile network, and is NOT ready to answer.
- FIG. 5 is a signalling flow chart illustrating exemplary processes of the method in accordance with the invention, for an outgoing call setup when a multimode communication unit is in the range of an enterprise wireless network.
- FIG. 6 represents the exemplary embodiment MS of the mobility server according to the invention.

### DETAILED DESCRIPTION OF A PREFERRED EMBODIMENT

In overview, the present disclosure concerns various kinds of wireless communications units, typically a wireless mobile device that may be alternately used within a public wide area network, and within a wireless private network, such as an enterprise network, comprising a communication server providing some telephony services. Examples of such units include mobile phones, personal digital assistants, personal assignment pads, and personal computers equipped for wireless operation, provided such units are arranged and constructed for operation in different networks.

Much of the method, when implemented, is best supported with or in software or integrated circuits. It is expected that one of ordinary skill will be readily capable of generating such software instructions or integrated circuits with minimal experimentation. Therefore, in the interest of brevity and minimization of any risk of obscuring the principles and concepts according to the present invention, further discussion of such software and integrated circuits, if any, will be limited to the essentials with respect to the principles and concepts used by the preferred embodiments.

The communication units of particular interest include those providing or facilitating voice communications services or data or messaging services over wide area networks (WAN), such as conventional two way systems and devices, various cellular phone systems including analog and digital cellular, CDMA (code division multiple access) and variants thereof, GSM, GPRS (General Packet Radio System), 2.5G and 3G systems such as UMTS (Universal Mobile Telecommunication Service) systems, Internet Protocol (IP) Wireless Wide Area Networks like IEEE 802.15, 802.16, 802.174, 802.20, 802.21, integrated digital enhanced networks and variants or evolutions thereof.

Furthermore the wireless communication units of interest include those having short range wireless communications capability normally referred to as WLAN capabilities, such as IEEE 802.11, Bluetooth, or Hiper-Lan and the like preferably using CDMA, frequency hopping, OFDM or TDMA access technologies and one or more of various networking protocols, such as TCP/IP (Transmission Control Protocol/Internet Protocol), UDP/UP (Universal Datagram Protocol/Universal Protocol), IPX/SPX (Inter-Packet Exchange/Sequential Packet Exchange), Net BIOS (Network Basic Input Output System) or other protocol structures. Alternatively the wireless communication units or devices of interest may be connected to a LAN using protocols such as TCP/IP, UDP/UP, IPX/SPX, or Net BIOS via a hardwired interface such as a cable and/or a connector.

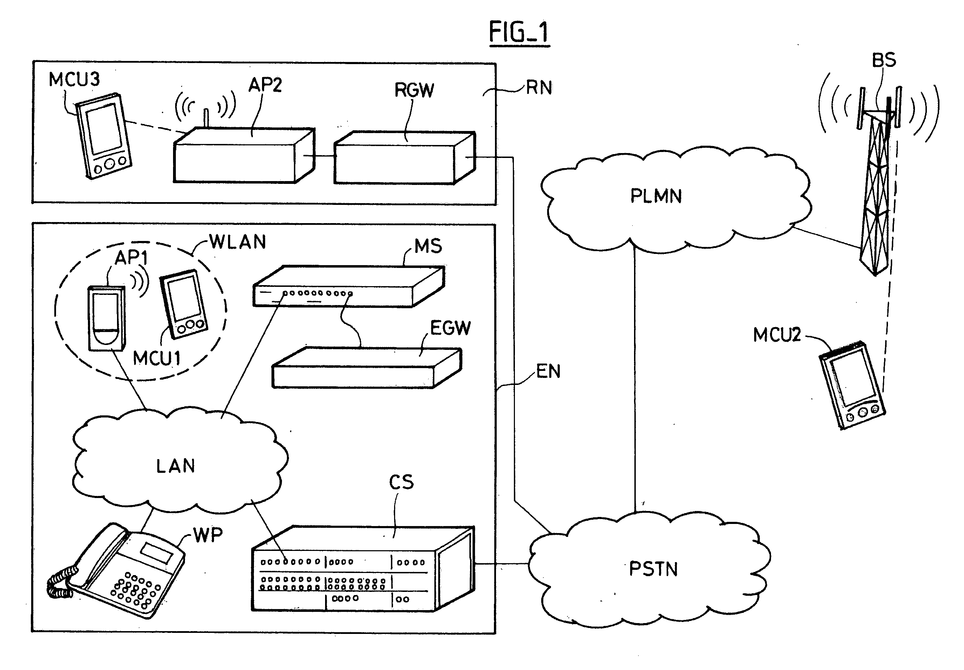

**Figure 1** is a diagram illustrating exemplary wireless networks where multi-mode communication units can be used in cooperation with a server according to the invention. An exemplary enterprise network EN comprises:
- a communication server CS,
- wired Internet Protocol phones WP,
- a mobility server MS according to the invention,
- a wireless local area network WLAN, comprising Wifi radio access points AP1, for instance,
- and an Ethernet local area network LAN interconnecting all these elements.

This exemplary enterprise network uses the Internet protocol family, and

SIP (Session Initiation Protocol). The communication server CS is linked to a Public Switched Telephone System PSTN, via a gateway integrated to this server and not represented on the figures. The mobility server MS is linked to a Public Land Mobile Network PLMN, via a gateway EGW. This Public Land Mobile Network comprises base stations BS.

Some homes are equipped with residential networks such as the exemplary residential network RN that enables to use a Wifi phone, and that comprises:
- a residential gateway RGW, linked to the Public Switched Telephone Network PSTN by an Asymmetrical Digital Subscriber Line (ADSL),
- and a Wifi radio access point AP2, linked to the residential gateway RGW.

Some public places (such as airports) are equipped with Wifi hotspots also enabling to use a Wifi phone.

Let us consider threes employees of the enterprise, each of these employee being provided with a multimode communication unit that can be alternately linked to the wireless local area network WLAN of the enterprise, or to the Public Land Mobile Network PLMN, or to a residential network RN.

A first employee is in the premises of the enterprise, in the range of the wireless network WLAN. This first employee has a multimode communication unit MCU1, and he/she places phone calls and receives phone calls via a Wifi radio access point AP1, and classically benefits from the sophisticated telephony services provided by the communication server CS of the enterprise.

A second employee is outside the premises of the enterprise, and so is out of the range of the wireless network WLAN. This second employee has a multimode communication unit MCU2, and he/she places phone calls and receives phone calls via a base station BS of the Public Land Mobile Network PLMN. However the second employee benefits from the sophisticated telephony services provided by the communication server CS of the enterprise, thanks to the mobility server MS, as it will be explained below.

A third employee is at home, and so is out of the range of the wireless network WLAN of the enterprise. This third employee has a multimode communication unit MCU3, and he/she places phone calls and receives phone calls via the Wifi radio access point AP1, and the Public Switched Telephone System PSTN. However this third employee benefits from the sophisticated telephony services provided by the communication server CS of the enterprise, thanks to the mobility server MS, as it will be explained below.

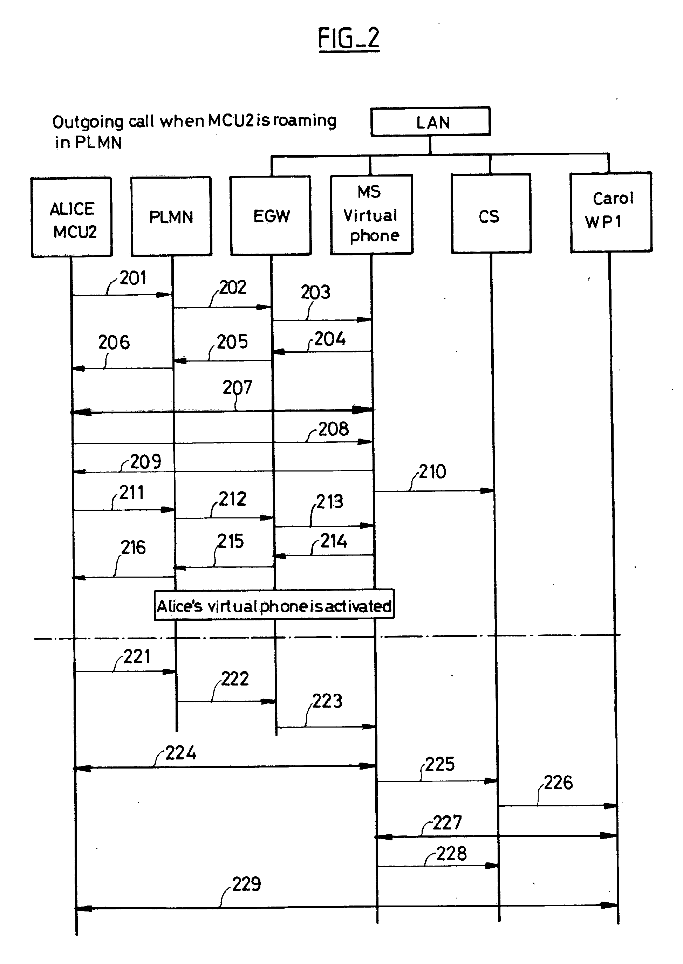

**Figure 2** is a signalling flow chart illustrating exemplary processes of the method in accordance with the invention, for an outgoing call setup when a multimode communication unit is roaming in the Public Land Mobile Network PLMN. The signalling protocol is SIP (Session Initiation Protocol) for instance.

Alice is employed by the enterprise that owns the enterprise telecom network EN represented on figure 1. When she is outside the Wifi range of the wireless local area network WLAN, Alice continues to use her professional Wifi-GSM multimode communication unit MCU2. She activates the GSM mode. In order to benefit of the services provided by the enterprise communication server CS, she activates a personal virtual phone which is a software telephony module run on the mobility server MS.
**Step 201:** Alice dials a Direct Inward System Access number (DISA) that is common to all the personal virtual phones hosted on the mobility server MS. The multimode communication unit MCU2 sends a call setup request message to the Public Land Mobile Network PLMN, this request containing the DISA number as a callee's number.
**Steps 202-203:** The public land mobile network PLMN forwards the message to the mobility server MS, via the gateway EGW, in order to establish a call in the usual way through the public land mobile network PLMN.
**Step 204-205-206:** The mobility server MS responds to Alice's multimode communication unit MCU2 by sending an acknowledgement message via the gateway EGW.
**Step 207:** A bidirectional voice channel is established between Alice's communication unit MCU2 and the mobility server MS.
**Step 208:** On this voice channel, Alice's communication unit MCU2 then sends a message to the mobility server MS for being authenticated and for requesting the activation of Alice's virtual phone.
**Step 209:** On this same voice channel, the mobility server MS responds to Alice's multimode communication unit MCU2 by sending a message indicating that Alice's virtual phone has been activated.
**Step 210:** Then the mobility server MS registers Alice's virtual phone in the communication server CS. From now on, the communication server CS will deal with Alice's virtual phone as with any other IP phone of enterprise.
**Step 211-213:** Alice's multimode communication unit MCU2 releases the call in a classical way, by sending a message to Public Land Mobile Network PLMN. The release message is forwarded by the gateway EGW up to the mobility server MS.
**Step 214-216:** Then the mobility server MS indicates the disconnection by sending a disconnection message to the gateway EGW. The disconnection message is forwarded by the gateway EGW up to Alice's multimode communication unit MCU2 .

From now on, Alice's virtual phone is considered as the phone assigned to Alice in the enterprise network EN.

Later, Alice uses her multimode communication unit MCU2, to call Carol who has a wired IP phone WP1 attached to the enterprise local area network LAN.
**Step 221:** Alice dials the Direct Inward System Access number (DISA) to call the mobility server MS, via the public land mobile network PLMN .
**Step 222-223:** The public land mobile network PLMN sets up a call to the mobility server MS, via the enterprise gateway EGW.
**Step 224:** A bidirectional voice channel is set up between the multimode communication unit MCU2 and Alice's virtual phone in the mobility server MS. Alice dials Carol's extension number. As a voice channel has been set up, this extension number is transmitted to the mobility server MS as a series of audio tones (Dual Tone Multi Frequencies for instance) in the voice channel.
**Step 225:** In the mobility server MS, Alice's virtual phone decodes the series of audio tones. Then it requests a call setup between itself and Carol's phone WP1, by sending a message to the communication server CS, this message containing Carol's extension number as the callee's number, and Alice's virtual phone extension number as the caller's number.
**Step 226:** The communication server CS forwards this request message up to Carol's phone WP1.
**Step 227:** The communication server CS sets up a call between Alice's virtual phone in the mobility server MS, and Carol's phone WP1, in a classical way. Alice's name is displayed on Carol's phone. A bidirectional voice channel is set up between Alice's virtual phone in the mobility server MS, and Carol's phone WP1.
**Step 228:** The mobility server MS commands the communication server CS to make it join the first call setup between Carol's phone and Alice's virtual phone, on one side, and the second call setup between Alice's virtual phone and Carol's phone WP1, on the other side.
**Step 229:** A bidirectional voice channel links Alice's multimode communication unit MCU2 and Carol's phone WP1.

The virtual phone comprises an interface to link a call made with a voice coding and a transmission protocol used in the public land mobile network PLMN, and a call made with a voice coding and a transmission protocol used in the enterprise local area network EN. For instance, in a GSM network, the coding is made according to the standards ITU-T G.711 or AMR (Adaptative Multi-Rate), and the transmission is made in a time division multiplex circuit at 64 Kbits/s. In a 3G network, the coding is made according to the standards AMR-WB (Adaptative Multi-Rate Wide Band), orG.722.2.

In an IP local area network, the coding is made according to the standards IETF 3550 and 3551, for instance, and the transmission is made in Voice Over IP packets with the Real-time Transport Protocol (RTP).

The steps would be the same if the callee had a terminal connected to the public switched telephone network, PSTN, since this latter is accessible by the communication server CS (via a gateway integrated to the communication server CS, and not represented on the figures).

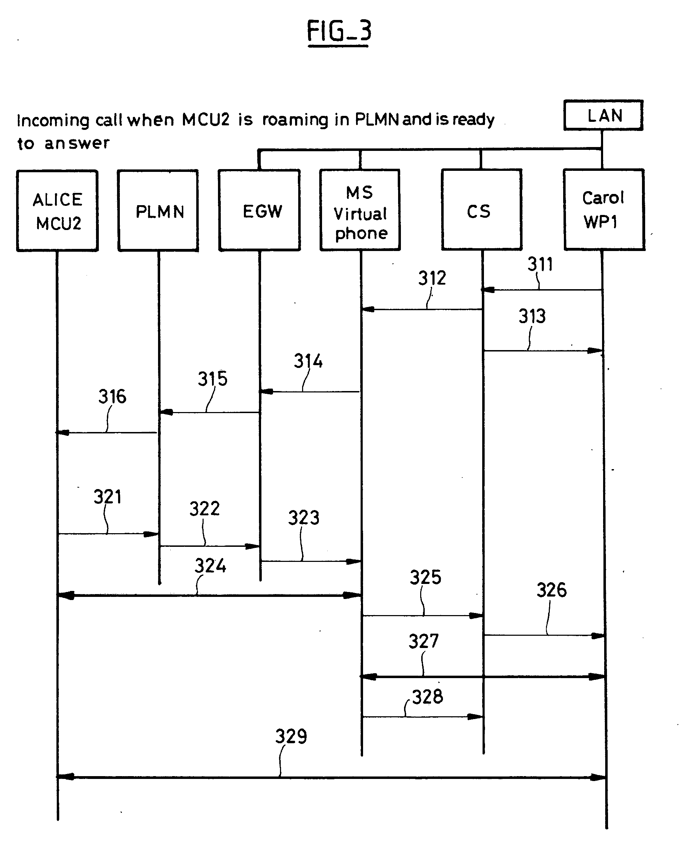

**Figure 3** shows a signalling flow chart illustrating exemplary processes of the method in accordance with the invention, for an incoming call setup when a multimode communication unit is roaming in a public land mobile network, and is ready to answer. Alice is outside of the Wifi range of the enterprise network EN. Alice continues to use her professional Wifi-GSM multimode communication unit MCU2. She has activated the GSM mode on her multimode communication unit MCU2, and her personal virtual phone on the mobility server MS, as described above. Now Carol is calling Alice, from Carol's wired IP phone WP linked to the enterprise network EN.
**Step 311:** Carol dials Alice's extension number, 77702 for instance, which is assigned to Alice's virtual phone, since Alice has no wired phone in the enterprise network EN. Carol's IP phone WP1 sends a message to the communication server CS, this message containing Alice's extension number and requesting a call setup.
**Step 312:** The communication server CS forwards this message to Alice's virtual phone which is located in the mobility server MS.
**Step 313:** The communication server CS indicates to Carol's phone WP1 that Alice's virtual phone is being called.
**Step 314-316:** The mobility server MS sends a call setup request message to Alice's multimode communication unit MC2, via the gateway EGW and the public land mobile network PLMN. This message contains a callee's number, 06 31 92 23 34 for instance, which is Alice's subscriber number in the public land mobile network PLMN, and a caller's number which is the DISA number assigned to Alice's virtual phone. Alice's multimode communication unit MCU2 rings.
**Step 321-323:** Alice takes the call. Her multimode communication unit MCU2 sends a message to Alice's virtual phone, in the mobility server MS, via the land mobile network PLMN and the gateway EGW, this message indicating that the call is accepted.
**Step 324-325:** The mobility server sends to Carol phone WP, via the communication server CS and the local area network LAN, a message indicating that the call has been established. In fact, there are two calls established.
**Step 326:** A call has been established between Carol's phone and Alice's virtual phone.
**Step 327:** A bidirectional voice channel has been established between Alice's virtual phone and Alice's multimode communication unit MCU2.
**Step 328:** The mobility server MS commands the communication server CS to make it join the first call setup between Carol's phone and Alice's virtual phone, on one side, and the second call setup between Alice's virtual phone and Alice's multimode communication unit MCU2, on the other side.
**Step 329:** A bidirectional voice channel links Carol's phone WP1 and Alice's multimode communication unit MCU2.

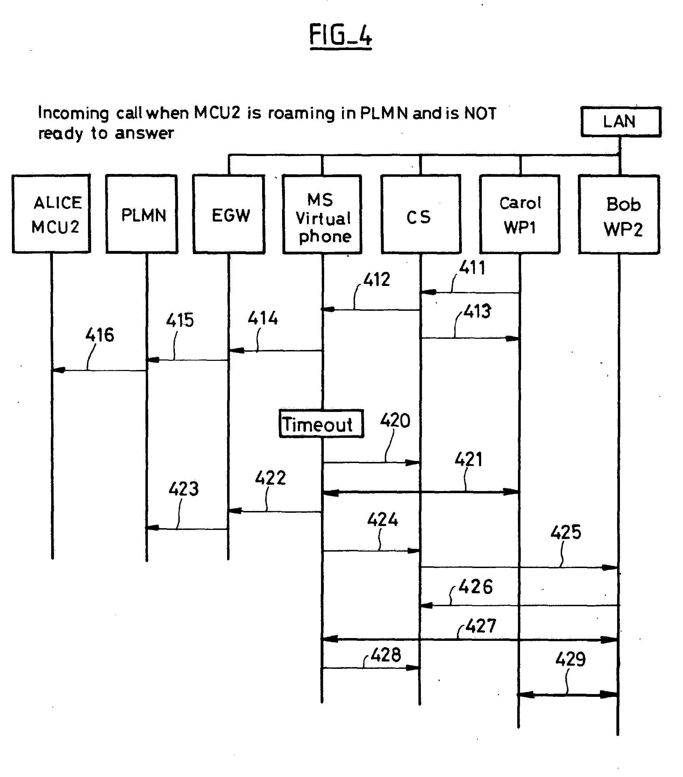

**Figure 4** is a signalling flow chart illustrating exemplary processes of the method in accordance with the invention, for an incoming call setup when a multimode communication unit is roaming in a public land mobile network, and is not ready to answer. Alice is out of reach of the cellular network PLMN, or she does not want to be disturbed. She has previously configured her virtual phone for a direct forwarding, or for a conditional forwarding on no reply, so that any incoming call is forwarded to Bob's wired IP phone WP2 for instance (it could be a voice mail system as well). Carol is calling Alice.
**Step 411:** Carol dials Alice's extension number, 77702, which is assigned to Alice's virtual phone. Carol's wired IP phone WP1 sends a message to the communication server CS, this message containing the extension number 77702 and requesting a call setup.
**Step 412:** The communication server CS forwards this message to Alice's virtual phone which is located in the mobility server MS.
**Step 413:** The communication server CS indicates to Carol's phone WP1 that Alice is being called.
**Step 414-416:** In the mobility server MS, Alice's virtual phone sends a call setup message to Alice's multimode communication unit MC2, via the gateway EGW and the public land mobile network PLMN. This message contains a callee's number, 06 31 92 23 34 for instance, which is Alice's subscriber number in the public land mobile network PLMN, and a caller's number which is the DISA number assigned to Alice's virtual phone. In this example, Alice's multimode communication unit MCU2 does not answer.
**Step 420:** In the mobility server MS, a timer associated to Alice's virtual phone expires. Then the mobility server MS sends a message to the communication server CS, this message indicating that a first call is established between Carol's phone WP1 and Alice's virtual phone.
**Step 421:** A bidirectional voice channel has been established between Alice's virtual phone and Carol's phone WP1.
**Step 422-423:** The mobility server MS sends a message to the cellular network PLMN via the gateway EGW, this message indicating that the call setup request to Alice's multimode communication unit MCU2is abandoned. **Step 424-425:** In the mobility server MS, Alice's virtual phone sends a message to Bob's wired IP phone WP2, via the communication server CS, this message requesting a call setup between Alice's virtual phone and Bob's phone WP2.
**Step 426:** Bob's wired IP phone WP2 answers that the call is accepted.
**Step 427:** A bidirectional voice channel is established between Alice's virtual phone and Bob's phone WP2.
**Step 428:** The mobility server MS sends a message to the communication server CS requesting to join two calls: the first call between Carol's phone WP1 and Alice's virtual phone on one side, and the second call between Alice's virtual phone and Bob's phone WP2.
**Step 429:** A bidirectional voice channel links Carol's phone WP1 and Bob's phone WP2.

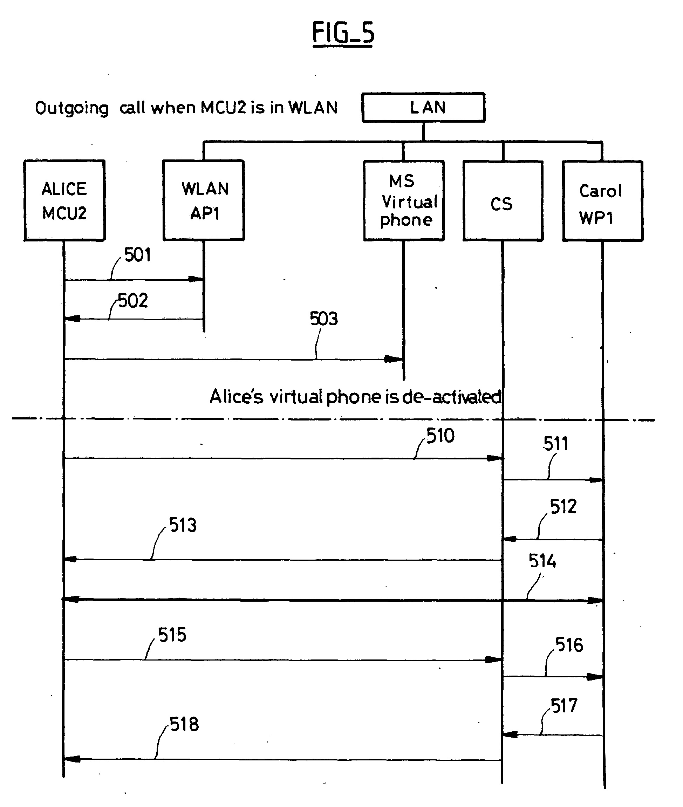

**Figure 5** is a signalling flow chart illustrating exemplary processes of the method in accordance with the invention, for an outgoing call setup when a multimode communication unit is in the WLAN range of an enterprise network. Alice is coming back to the premises of the enterprise. She is now in the range of the wireless enterprise network WLAN. Alice wants to use her professional Wifi-GSM multimode communication unit MCU2 in Wifi mode for cost reasons.
**Step 501-502:** The multimode communication unit MCU2 detects that it is in the range of the WLAN of the enterprise, the unit knowing the identity of this network. It automatically activates its Wifi mode. It is automatically authenticated and registered in this network WLAN, according to a known method. Then it sends IP packets on the enterprises local area network EN. These packets contain its IP address and its MAC address.

**According to a first implementation (not represented on** **figure 5****):**
   The mobility server MS detects these packets, and so detects the presence of multimode communication unit MCU2 in the local network. The mobility server MS knows that this multimode communication unit MCU2 is associated to Alice's personal virtual phone. It de-activates Alice's personal virtual phone. The real phone MCU2 replaces the virtual phone at a same IP address. The communication server CS and the local area network LAN do not see any difference. They are not affected.
**According to second implementation:**
   Step 503: Then Alice's multimode communication unit MCU2 explicitly signals its presence to the mobility server MS, by sending a message to it. When this message is received by the mobility server MS, it de-activates Alice's virtual phone.
   **Step 510:** Now the multimode communication unit MCU2 behaves like a classical Wifi phone. The mobility server MS does not intervene any more. When Alice wants to place a call to Carol's wired IP phone WP1, for instance, Alice dials Carol's extension number, 77704 for instance. Her multimode communication unit MCU2 sends a message to the communication server CS, this message containing the extension number of the called phone.
   **Step 511:** The communication server CS sends a call setup request to Carol's phone WP1.
   **Step 512:** When Carol answers, her phone WP1 sends, to the communication server CS, a message indicating that the call is accepted.
   **Step 513:** This message is forwarded by the communication server CS to Alice's multimode communication unit MCU2.
   **Step 514:** A bidirectional voice channel is established between Alice's multimode communication unit MCU2 and Carol's phone WP1.
   **Step 515-516:** When Alice and Carol have finished talking, Alice hangs up. Her multimode communication unit MCU2 sends a disconnection message to the communication server CS. This latter forwards it to Carol's phone WP1. **Steps 517-518:** Carol's phone WP1 answers by sending, to the communication server CS, a message indicating that it has disconnected. Then the communication server CS forwards this message to Alice's multimode communication unit MCU2.

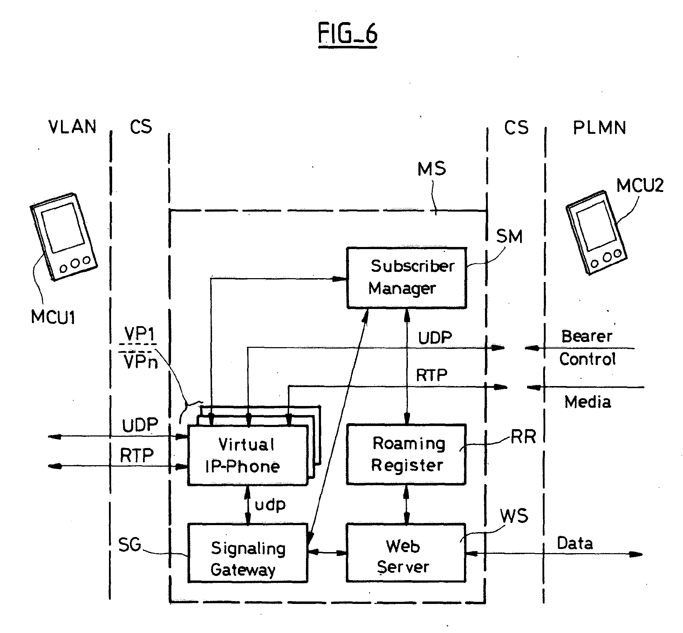

**Figure 6** schematically represents an exemplary embodiment MS of the mobility server according to the invention. This exemplary embodiment comprises:
- n virtual IP phones VP1, ..., VPn, respectively corresponding to n users that may go roaming outside of the enterprise premises with their respective multimode communication units. When such a user returns inside the range of the enterprise wireless local area network WLAN, his/her respective virtual IP phone gets de-activated. For instance RTP and UDP flows are exchanged between a multimode communication unit MCU1 and a virtual phone VP1 via the communication server CS, when the multimode communication unit MCU1 de-activates the virtual phone VP1. In other examples, RTP and UDP flows are exchanged between the virtual phone VP2 and the communication server CS, when a multimode communication unit MCU2 is used in the public land mobile network PLMN, as illustrated on figures 2-4. The communication server CS converts these RTP and UDP flows into voice and signalling data flows according to the protocols used by the public land mobile network PLMN.
- A signalling gateway SG is coupled to the virtual phones VP1, ..., VPn, in order to convert the signalling data supplied by a multimode communication unit MCU1 when it is in the public land mobile network PLMN, into signalling data according to a protocol used inside the enterprise network (Either SIP(Session Initiation Protocol), or a proprietary signalling protocol).
- A roaming register RR is used for registering all the multimode communication units that are presently roaming in the public land mobile network PLMN. A classical registering method, with a login and a password per subscriber, protects subscribers' accounts against fraud.
- A web server WS is used for establishing a data connection (i. e. a connection outside of the voice base band) between a multimode communication unit that is roaming in the public land mobile network PLMN, and the mobility server MS, for exchanging any control information for functions such as registering a subscriber, invocating services that can be provided by the communication server CS, configuring subscriber accounts in the mobility server MS, etc.
- A Subscriber Manager SM manages a subscriber account for each subscriber who has a multimode communication unit that can roam in a wide area network. A subscriber account can comprise:
   -- A DISA number, a phone number in the public land mobile network, an extension number in the enterprise network, and privileges assigned to the user.
   -- A subscriber status: subscriber being registered in the wireless local area network WLAN, or subscriber being registered in the public land mobile network PLMN (and registered in the roaming register RR), or subscriber being registered nowhere (The subscriber's communication unit has been put off, or it cannot be reached by the base stations of the public land mobile network PLMN).
   -- A subscriber resource status: Available, or engaged in a communication, or forwarded to another terminal.
The subscriber manager SM is coupled to the roaming register RR, to the signaling gateway SG, and to all the virtual phones VP1, ... , VPn in order to control them all. In particular, it can control a virtual phone in order to enable a multimode communication unit to benefit from the services of the communication server CS of the enterprise local area network EN, when said unit is roaming in a wide area network. For instance, if a subscriber is outside the enterprise and wants to let the incoming calls to be filtered by a predetermined secretary, this user sends a command to the subscriber manager SM, in the mobility server MS, via the web server WS. Then the subscriber manager SM requests the subscriber's virtual phone VPi to configure the subscriber's context in the communication server CS, so as to forward the calls to the subscriber's secretary. The subscriber's context is configured in the same way as if the subscriber was classically requesting this call forwarding from a wired IP phone inside the enterprise premises.

## Claims

1. A method for enabling a multimode communication unit (MCU2) to benefit from the services of a local area network (EN) when said unit is roaming in a wide area network (PLMN), this local area network comprising a communication server (CS) for setting up calls and providing services, **characterized in that** it comprises the steps of:
- establishing (207) a bidirectional voice channel between the multimode communication unit (MCU2) and a mobility server (MS) in the local area network (EN), via said wide area network (PLMN),
- requesting (208, 209) the mobility server (MS) to authenticate the multimode communication unit (MCU2), and then to register it in said communication server (CS),
- and activating (210) a virtual phone in said mobility server (MS), said virtual phone having an extension number proper to the multimode communication unit (MCU2), and behaving as a wired phone of the local area network (EN), for requesting a call setup to another terminal, and for accepting a call setup requested by another terminal.

2. A method according to claim 1 **characterized in that,** when the multimode communication unit (MCU2) is requesting a call setup between it and a called terminal (WP1), it further comprises the steps of:
- establishing (224) a bidirectional voice channel between the multimode communication unit (MCU2) and said virtual phone in the mobility server (MS) via said wide area network (PLMN),
- establishing (227) a bidirectional voice channel between said virtual phone in the mobility server (MS) and the called terminal (WP1),
- and then joining (229) these two channels to constitute a bidirectional voice channel between the multimode communication unit (MCU2) and the called terminal (WP1).

3. A method according to claim 1 **characterized in that,** when a calling terminal (WP1) is requesting a call setup between it and the multimode communication unit (MCU2), if the multimode communication unit (MCU2) is ready to receive a call, it further comprises the steps of:
- establishing (324) a bidirectional voice channel between the multimode communication unit (MCU2) and the mobility server (MS) via said wide area network (PLMN),
- establishing (327) a bidirectional voice channel between the calling terminal (WP1) and the mobility server (MS),
- and then joining (329) these two channels to constitute a bidirectional voice channel between the multimode communication unit (MCU2) and the calling terminal (WP1).

4. A method according to claim 1 **characterized in that,** when a calling terminal (WP1) is requesting a call setup between it and the multimode communication unit (MCU2), if the multimode communication unit (MCU2) is NOT ready to receive a call, it further comprises the steps of:
- establishing (421) a bidirectional voice channel between the calling terminal (WP1) and the virtual phone in the mobility server (MS),
- establishing (427) a bidirectional voice channel between the virtual phone in the mobility server (MS) and a third terminal (WP2),
- and then joining (429) these two channels to constitute a bidirectional voice channel between the virtual phone and the third terminal (WP2).

5. A server (MS) for enabling a multimode communication unit (MCU2) roaming in a wide area network (PLMN) to benefit from the services of a local area network (EN), this local area network comprising a communication server (CS) for setting up calls and providing services, **characterized in that** it comprises means for executing the steps according to one of the preceding claims.
